# EUROPEAN PATENT SPECIFICATION

(11) **EP 1 215 085 B1**
(45) Date of publication and mention of the grant of the patent: **20.09.2006**
(21) Application number: 01129810.6
(22) Date of filing: 14.12.2001
(51) Int. Cl.: B60R 13/08, F02B 77/13

(54) **Shaped sound absorption element and method for producing the same**
Vorgeformtes Schalldämmelement und Verfahren zur Herstellung desselben
Elément insonorisant préformé et sa méthode de fabrication

(30) Priority: 15.12.2000 CH 24472000
(43) Date of publication of application: 19.06.2002
(73) Proprietor: RIETER AUTOMOTIVE (INTERNATIONAL) AG, 8702 Zollikon (CH)
(72) Inventor: Buard, Eric, Elisabethville, 78680 Epône (FR)
(74) Representative: Alder, Hans Rudi

(56) References cited:
- EP-A- 0 063 715
- EP-A- 0 949 066
- DE-A- 2 606 324
- DE-U- 29 908 484
- US-A- 5 709 925

## Description

The present invention concerns a shaped sound absorption element and further concerns a method of producing such an element.

Such elements preferably are inserted in vehicles, i.e. passenger cars, autobuses or trucks, but can also be used in any building construction. In particular, these elements are designed for undershields, cylinder head covers, dash boards etc. in motor vehicles. From Swiss Patent CH-681'144 a shaped element designed as an acoustic component is known, which comprises a layered structure having a vibration damping layer, a sound absorbing layer arranged above this layer and a protective layer adhered to the sound absorbing layer, which protective layer is designed as a foil being impermeable to water. This known element comprises a relatively hard surface, which reflects a large portion of the impinging acoustic energy. Sound reflections reduce the actual absorption efficacy of such elements. Furthermore, the method for producing this shaped element is relatively complex and time consuming. A further sound absorption element having individual hollow chambers is disclosed in DE 299 08 484 U.

It is therefore the object of the present invention to provide an acoustically more advantageously shaped element. In particular, it is the aim of the present invention to use the absorption efficacy of the absorbing material in a more efficient manner. It is a further object of the present invention to provide an economical method for producing this shaped element.

This object is achieved by a shaped element having the features of independent claim 1. The dependent claims 2 to 6 show further advantageous embodiments of the invention. The object is further achieved by a method for producing a shaped element having the features of independent claim 7. The dependent claims 8 to 10 show further advantageous steps of the method.

In particular, the object of the present invention is achieved with a shaped sound absorption element comprising a basic structure made of fibre reinforced thermoplastic material, a thermoplastic foil arranged over this basic structure, a plurality of individual absorption material parts bonded to said thermoplastic foil, and a thermoplastic separating foil covering said absorption material parts, whereby the thermoplastic foil is firmly bonded to the basic structure and whereby the separating foil lies loosely upon the absorption material parts and in between the absorption material parts is locally firmly bonded to the thermoplastic foil which is firmly bonded to the basic structure.

The shaped element according to the invention has the advantage that the thermoplastic separating foil lies loosely, i.e. floats, upon the absorption material parts, so that the sound energy, i.e. pressure waves, impinging upon the separating foil can pass on relatively unhindered to the absorption material parts and is absorbed there. In contrast thereto the prior art shaped products comprise an outer foil which is glued to the absorption material, resulting in a stiff surface of the shaped product, so that a large portion of the impinging sound energy is reflected instead of being absorbed.

In accordance with the invention, the absorption material parts are water tightly surrounded by the thermoplastic foil and the separating foil, so that the absorption material parts are arranged inside the shaped element and are completely protected from water and dust. The absorption material parts are preferably made of a foam, felt or non-woven with specific sound absorbent properties. In particular, this material is extremely light-weight and soft and is self-reexpansibly compressible, preferably by a factor of about 10.

The object of the present invention is further achieved by a production method, in particular by a method for producing shaped elements comprising a fibre reinforced thermoplastic, an absorption material and a separating foil, which method comprises the steps of
- preforming a basic structure out of fibre reinforced thermoplastic by applying heat and pressure,
- bonding a plurality of preshaped absorption material parts to a thermoplastic foil,
- inserting a separating foil into a mould of a forming tool, said mould having cavities, whereby a vacuum is applied to the cavities which causes the separating foil to follow the course of the cavities,
- inserting the plurality of preshaped absorption material parts into the cavities, which are lined with the separating foil, in such a manner that the thermoplastic foil remains outside the cavities,
- arranging the still warm basic structure over the thermoplastic foil,
- closing the forming tool and applying pressurised air to the cavities so that the separating foil, the absorption material parts and the thermoplastic foil are pressed against the basic structure, such that the shaping of the basic structure, the bonding of the thermoplastic foil with the basic structure and the bonding of the thermoplastic foil with the separating foil at their mutually contacting areas are achieved in one step.

The method according to the invention has the advantage that only a few simple steps are required for producing the shaped sound absorption element, in particular the inventive method allows that the shaping of the basic structure, the bonding of the thermoplastic foil with the basic structure and the bonding of the thermoplastic foil with the separating foil at their mutually contacting areas are achieved in one step. Furthermore this method allows an automation of the manufacturing process with controllable constant quality. An economical production is achieved by using a flat and unshaped pre-formed basic structure, which is shaped and bonded with the other parts in one specific mould and in one step only.

The used basic structure is preferably made of a uni- or multidirectional thermoplastic matrix which is reinforced with suitable fibres. All currently known types of fibres can be used for reinforcement, in particular E-glass, S-glass, aramide, whiskers and C-fibres. All thermoplastic matrices are suitable for use as a carrier material, such as polyethersulfone, polyetherimide, polyetherketone, polyamide, polythetrafluorethylene, perfluoralkoxycopolymers or thermoplastic polyimides.

A number of embodiments of the invention are described in more detail with the aid of the Figures which show:
- Figs. 1a, 1b: method steps for preforming the basic structure;
- Fig. 2: a method step for inserting a plurality of preshaped absorption material into cavities of a forming tool;
- Figs. 3a-3d: method steps of a first method for producing the shaped sound absorption element;
- Figs. 4a-4d: sections through differently designed shaped products;
- Figs. 5a-5e: method steps of a second method for producing the shaped sound absorption elements; and
- Fig. 6: shows a method step for producing a shaped basic structure.

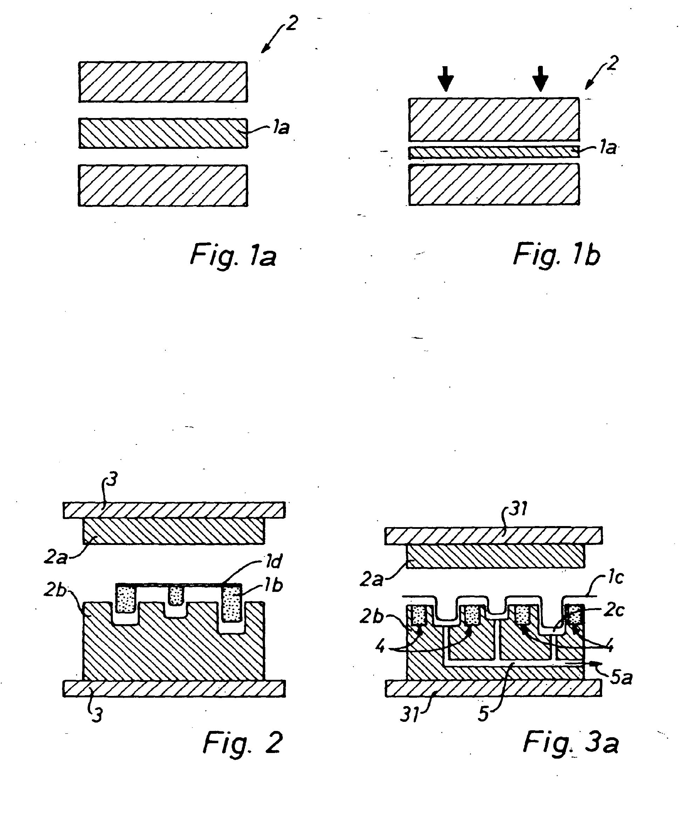

The method of producing the basic structure 1a is shown in Figures 1a and 1b in a sectional view through a forming tool 2 having an upper and a lower heatable mould plate. In Figure 1a, a semifinished product is inserted between the mould plates. The upper and lower mould plates are heated to a temperature suitably adjusted to the composition of the semifinished product and, as shown in Figure 1b, are subsequently pressed together by means of a force F, so that a preformed basic structure 1a is formed in a predetermined time under the effects of pressure and heat.

In the method step shown in Figure 2 the individually shaped absorption material parts 1b are bonded to a thermoplastic foil 1d. The cross sectional view of the forming tool 2 shown in Figure 2 shows a first forming mould 2a and a second forming mould 2b, both arranged in a mould 3. The temperature of the forming moulds 2a, 2b is chosen according to composition of the absorption material in order to bond the individual absorption material parts 1b with the thermoplastic foil 1d. For example, a PU-foam can be used as absorption material. Instead of foams it is also possible to use other acoustically effective materials, such as, for example, lightly compacted matted fibre non-wovens.

In Figures 3a to 3e, cross sections through a forming tool within the mould 31 show various stages of a first method for producing the shaped sound absorption element 1 according to the present invention.

The forming mould 2b has cavities 2c which are suitably designed and arranged according to the shape of the absorption material parts 1b. An opening of a fluid conducting canal system 5 is arranged in the base area of each cavity 2c. Thermally insulating parts 4 are located in the top regions of the surface of the forming mould 2b, and in particular between the cavities 2c. These insulating parts 4 can be made, for example, of a firm or compact foam, wood, rubber, fibreglass or glass fibre tubes/hollow glass.

In order to produce the shaped element 1, and as shown in the method step of Figure 3a, a thermoplastic separating foil 1c, also called a separating membrane, is laid on the forming mould 2b; subsequently a vacuum 5a is applied to the fluid conducting canal system 5, so that the separating foil 1c is sucked into the cavities 2c and thereby acquires a shape conforming to the shape of the cavities 2c. Dependent upon its composition, the separating foil 1c can be preheated prior to insertion into the moulding tool 2. The first forming mould 2a and the second forming mould 2b are preferably maintained at a temperature of around 20°C. The separating foil is made, for example, of a thin PVC-foil.

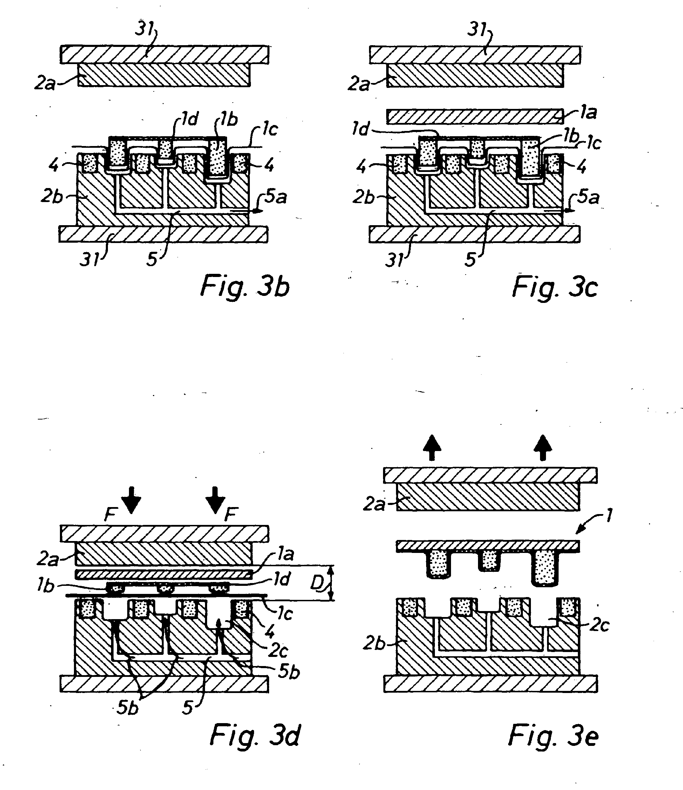

Whilst the vacuum 5a is maintained, a next method step - as shown in Figure 3b - comprises the insertion of the plurality of absorption material parts together with the bonded foil 1d into the forming tool, whereby the arrangement of the absorption material parts 1b and the arrangement of the cavities 2c match in such a manner, that the absorption material parts 1b are insertable into the cavities 2c. Subsequently, and as shown in Figure 3c, the preformed basic structure 1a, which is still warm from the forming process shown in Figures 1a, 1b, is inserted into the forming tool 2.

This is followed by the process shown in Figure 3d. Whilst the vacuum 5a is still maintained, the forming tool 2 is closed by exerting a pressure F. As soon as the forming tool has been closed, the cavities 2c are supplied with compressed air through the canal system 5, which results in the separating foil 1c being pressed out of the cavities 2c and simultaneously the absorption material parts 1b being compressed, as shown in Figure 3d, so that the thermoplastic foil 1d is evenly pressed against the basic structure. Thus, the element produced in this manner is shaped on one side according to the shape of the first forming mould 2a, whereby the thickness D of the shaped basic structure 1a is determined by the pressure within the forming tool 2 caused by the applied pressurised air. The pressure of the compressed air 5b is suitably selected according to the composition and the weight of the shaped element 1 to be produced.

In the method step shown in Figure 3d the temperature of the forming moulds 2a, 2b is set at 20°C. This means that the basic structure is sufficiently warm to result in a firm bonding between the thermoplastic foil 1d and the separating foil 1c and the basic structure 1a. The thermal insulators 4 provided in the second forming mould 2b serve to reduce heat loss, so that sufficient heat remains to allow a firm bonding between the basic structure 1a and the foils 1c, 1d.

Following the method step of Figure 3d, and as shown in Figure 3e, atmospheric pressure is applied to the fluid conducting canal system 5, the mould 3 is opened and the finished shaped element 1 is removed. The absorption material parts 1b automatically reverts to their original thickness.

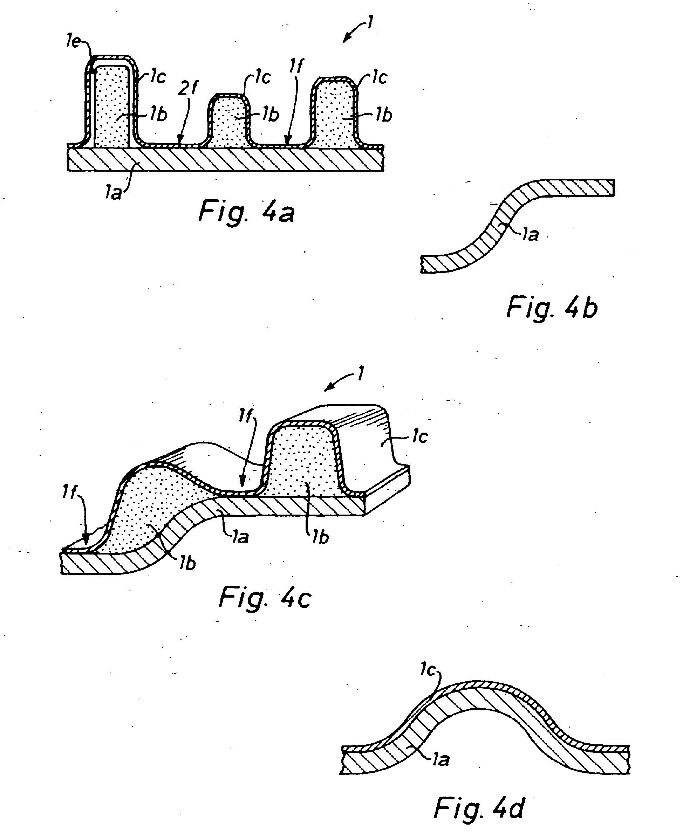

Figure 4a shows a longitudinal section through the shaped element produced according to the method as shown in Figures 1a to 3e. The absorption material parts 1b have resumed their original thickness. The separating foil 1c lies loosely on the absorption material parts 1b. The absorption material parts 1b are spaced from each other. Between these parts the separating foil 1c is firmly bonded to the basic structure 1a, whereby a firm bonding exists at areas 1f between the thermoplastic foil 1d (not shown in Figures 4a to 4d), the thermoplastic separating foil 1c and the basic structure 1a. This means that the absorption material parts 1b are water-tightly and air-tightly surrounded by the separating foil 1c and by the thermoplastic foil 1d. If the air pressure in this sealed space is higher than the atmospheric pressure, an air-filled intermediate space 1e can result between the absorption material parts 1b and the thermoplastic separating foil 1c, as shown on the left-hand side in Figure 4a. Alternatively, and as shown on the right-hand side in Figure 4a, the thermoplastic separating foil can lie directly on the absorption material 1b. Furthermore, the method according to the invention provides a basic structure 1a with a constant thickness. Furthermore, the inventive method allows the basic structure - a thermoplastic carrier or support material -, the absorption material and the thermoplastic separating foil to be bonded in one method step.

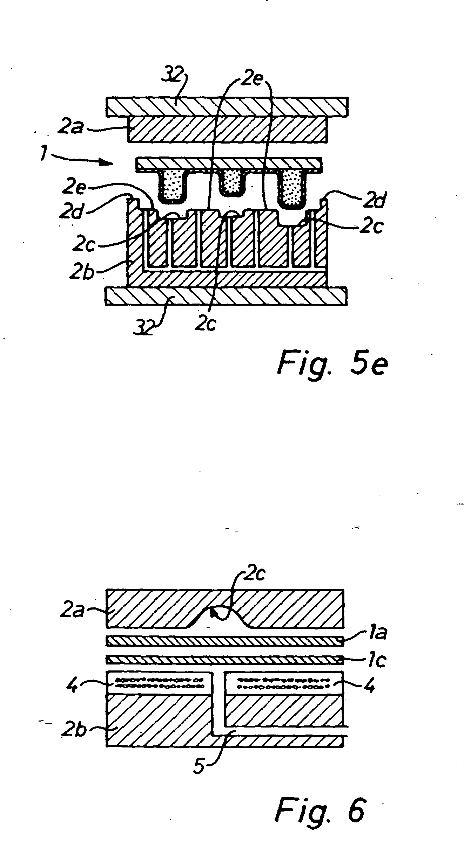

It can be advantageous to provide an additional contour to the basic structure 1a or to the shaped element 1. Figure 6 schematically shows a cross section through a forming tool 2 having a cavity 2c in the first forming mould 2a. The second forming mould 2b has an even surface and comprises a fluid conducting canal and an insulator 4. When the forming tool is closed, pressurised air is blown into the fluid conducting canal system 5, so that the basic structure 1a and the thermoplastic separating foil 1c are pressed into the cavity 2c and assume its shape, so that the shaped element 1 has a shaped portion as shown in Figure 4d. By using an appropriate design of the forming mould it is thus possible to obtain a large number of combinations of such contours and arrangements of the absorption material parts 1b, allowing, for example, the production of a shaped element 1 as shown in cross section in Figure 4c.

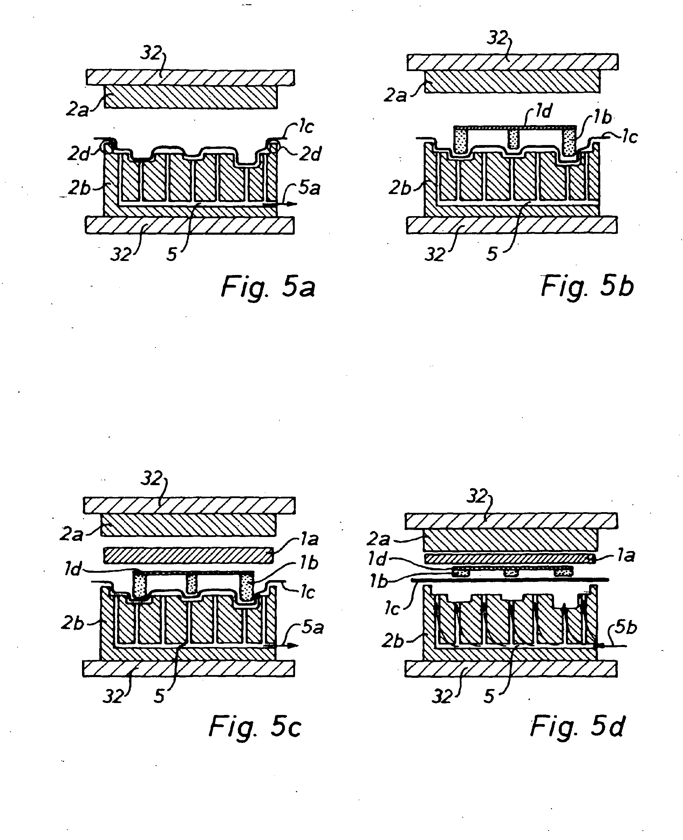

Figures 5a to 5e show a second production method. The basic structure 1a and the absorption material parts 1b with the foil 1d are produced as previously shown and described in Figures 1a, 1b and 2. The forming mould 32 does not comprise thermal insulators 4. In the method according to Figures 5a to 5e, insulation of the basic structure 1a is generated by an air layer formed between the second mould 2b and the basic structure 1a.

As shown in Figure 5e, the second mould 2b has a lateral shoulder 2d defining a first level and cavities 2c for receiving the absorption material parts 1b as well as areas defining a second level 2e. The cavities 2c and the areas 2e are connected to each other by the fluid conducting canal system 5. In the method step according to Figure 5a the separating foil 1c is placed into the forming tool 2 and a vacuum 5a is applied to the canal system 5, so that the separating foil 1c follows the contour of the surface of second mould 2b. Subsequently, in a method step as shown in Figure 5b, the absorption material parts 1b with foil 1d are inserted and in the method step as shown in Figure 5c the basic structure 1a is added. The forming tool is then closed, as shown in Figure 5c, pressurised air is applied to the canal system 5, and the separating foil 1c is pressed against the absorption material parts 1b and the basic structure 1a. In this way a hollow space is created between the cavities 2e and the basic structure 1a which thermally insulates the basic structure 1a and the separating foil 1c from the second mould 2b, thereby preventing a substantial migration of heat from the basic structure 1a to the second mould 2b.

In the next method step as shown in Figure 5e the finished shaped element can be removed from the forming tool.

## Claims

1. Shaped sound absorption element (1), in particular an acoustic component, comprising a basic structure (1a) comprising fibre reinforced thermoplastic material, a thermoplastic foil (1d) arranged over said basic structure (1a), a plurality of individual absorption material parts (1b) bonded to said thermoplastic foil (1d), and a thermoplastic separating foil (1c) covering said absorption material parts (1b), whereby the thermoplastic foil (1d) is firmly bonded to the basic structure (1a) and whereby the separating foil (1c) lies loosely upon the absorption material parts (1b) and in between the absorption material parts (1b) is locally firmly bonded to the thermoplastic foil (1d) which is firmly bonded to the basic structure (1a).

2. Element (1) according to claim 1, **characterised in that** the absorption material parts (1b) are water-tightly surrounded by the thermoplastic foil (1d) and the separating foil (1c).

3. Element (1) according to one of claims 1 or 2, **characterised in that** the melting temperature of the separating foil (1 c) is lower or approximately equal to that of the basic structure (1a).

4. Element (1) according to one of claims 1 to 3, **characterised in that** the absorption material parts (1b) comprise a foam, a felt or a non woven.

5. Element (1) according to one of claims 1 to 4, **characterised in that** the absorption material parts (1b) are self-reexpansibly compressible by a factor of 100, and in particular by a factor of 10.

6. Element (1) according to one of claims 1 to 5, **characterised in that** the basic structure (1a) comprises staple fibre reinforced thermoplastic.

7. Method for producing a shaped sound absorption element (1) comprising fibre reinforced thermoplastic, an absorption material (1b) and a separating foil (1c), comprising the steps of:
- preforming a basic structure (1a) out of fibre reinforced thermoplastic by applying heat and pressure,
- bonding a plurality of preshaped absorption material parts (1b) to a thermoplastic foil (1d) ,
- inserting a separating foil (1c) into a mould (2b) of a forming tool (2), said mould (2b) having cavities (2c), whereby a vacuum is applied to the cavities (2c) which causes the separating foil (1c) to follow the course of the cavities (2c),
- inserting the plurality of preshaped absorption material parts (1b) into the cavities (2c), which are lined with the separating foil (1c), in such a manner that the thermoplastic foil (1d) remains outside the cavities,
- arranging the still warm basic structure (1a) to be over the thermoplastic foil (1d),
- closing the forming tool (2) and applying pressurised air to the cavities (2c) so that the separating foil (1c), the absorption material parts (1b) and the thermoplastic foil (1d) are pressed against the basic structure (1a), such that the shaping of the basic structure (1a), the bonding of the thermoplastic foil (1d) with the basic structure (1a) and the bonding of the thermoplastic foil (1d) with the separating foil (1c) at their mutually contacting areas are achieved in one step.

8. Method according to claim 7, **characterised in that** the step of shaping the basic structure (1a), bonding the thermoplastic foil (1d) with the basic structure (1a) and bonding the thermoplastic foil (1d) with the separating foil (1c) at their mutually contacting points occurs at approximately room temperature, and in particular at about 20°C.

9. Method according to one of claims 7 or 8, **characterised in that** the separating foil (1c) is warmed prior to insertion into the forming mould (2b).

## Patentansprüche

1. Geformtes schallabsorbierendes Bauteil (1), insbesondere ein Akustikbauteil, umfassend ein Trägerelement (1a) mit faserverstärktem thermoplastischen Material, eine thermoplastische Folie (1d), welche über diesem Trägerelement (1a) angeordnet ist, eine Vielzahl einzelner Absorptionselemente (1b), welche mit dieser thermoplastischen Folie (1d) verbunden sind, und eine thermoplastische Trennfolie (1c), welche diese Absorptionselemente (1b) abdeckt, wobei die thermoplastische Folie (1d) fest mit dem Trägerelement (1a) verbunden ist und wobei die Trennfolie (1c) lose über den Absorptionselementen (1b) liegt und zwischen den einzelnen Absorptionselementen (1b) lokal und fest mit der thermoplastischen Folie (1d) verbunden ist, welche wiederum fest mit dem Trägerelement (1a) verbunden ist.

2. Bauteil (1) nach Anspruch 1, **dadurch gekennzeichnet, dass** die Absorptionselemente (1b) von der thermoplastischen Folie (1d) und der Trennfolie (1c) wasserdicht umschlossen sind.

3. Bauteil (1) nach einem der Ansprüche 1 oder 2, **dadurch gekennzeichnet, dass** die Schmelztemperatur der Trennfolie (1c) tiefer oder etwa gleich hoch liegt als diejenige des Trägerelementes (1a).

4. Bauteil (1) nach einem der Ansprüche 1 bis 3, **dadurch gekennzeichnet, dass** die Absorptionselemente (1b) Schaum, Filz oder Vlies umfassen.

5. Bauteil (1) nach einem der Ansprüche 1 bis 4, **dadurch gekennzeichnet, dass** die Absorptionselemente (1b) um einen Faktor 100 und insbesondere um einen Faktor 10 komprimierbar und selbstreexpandierbar sind.

6. Bauteil (1) nach einem der Ansprüche 1 bis 5, **dadurch gekennzeichnet, dass** das Trägerelement (1a) ein mit Schnittfasern verstärktes thermoplastisches Material umfasst.

7. Verfahren zum Herstellen eines geformten schallabsorbierenden Bauteils (1) mit faserverstärktem thermoplastischen Material, einem absorbierenden Material und einer Trennfolie (1c), umfassend folgende Schritte:
- Vorformen eines Trägerelementes (1a) aus faserverstärktem thermoplastischen Material mittels Anwendung von Wärme und Druck,
- Verbinden einer Vielzahl von vorgeformten Elementen aus absorbierendem Material, d.h. Absorptionselementen (1b) mit einer thermoplastischen Folie (1d),
- Einbringen einer Trennfolie (1c) in eine Form (2b) eines Formwerkzeuges (2), welche Form (2b) Kavitäten (2c) aufweist, wobei in den Kavitäten (2c) ein Vakuum erzeugt wird, welches die Trennfolie (1c) zwingt, sich an die Konturen der Kavitäten (2c) anzulegen,
- Einbringen der Vielzahl vorgeformter Absorptionselemente (1b) in diese Kavitäten (2c), welche mit der Trennfolie (1c) ausgelegt sind, in der Weise, dass die thermoplastische Folie (1d) ausserhalb der Kavitäten verbleibt,
- Anordnen des noch warmen Trägerelementes (1a) oberhalb der thermoplastischen Folie (1d),
- Schliessen des Formwerkzeugs (2) und Beaufschlagen der Kavitäten (2c) mit Druckluft derart, dass die Trennfolie (1c) die Absorptionselemente (1b) und die thermoplastische Folie (1d) gegen das Trägerelement (1a) gepresst werden, derart, dass die Verformung des Trägerelementes (1a), das Verbinden der thermoplastischen Folie (1d) mit dem Trägerelement (1a) und das Verbinden der thermoplastischen Folie (1d) mit der Trennfolie (1c) in ihren gegenseitigen Kontaktbereichen in einem Schritt erreicht wird.

8. Verfahren nach Anspruch 7, **dadurch gekennzeichnet, dass** der Schritt zum Verformen des Trägerelementes (1a), zum Verbinden der thermoplastischen Folie (1d) mit dem Trägerelement (1a) und zum Verbinden der thermoplastischen Folie (1d) mit der Trennfolie (1c) in deren gegenseitigen Kontaktbereichen bei etwa Zimmertemperatur stattfindet und insbesondere bei ca. 20° C.

9. Verfahren nach einem der Ansprüche 7 oder 8, **dadurch gekennzeichnet, dass** die Trennfolie (1c) vor dem Einbringen in das Formwerkzeug (2b) aufgewärmt wird.

## Revendications

1. Elément insonorisant préformé (1), et en particulier un élément acoustique, comprenant une structure de base (1a) en thermoplastique renforcé de fibres, une feuille thermoplastique (1d) disposée en recouvrement de ladite structure de base (1a), une pluralité de pièces individuelles en matériau absorbant (1b) liées à ladite feuille thermoplastique (1d), et une feuille de séparation thermoplastique (1c) recouvrant lesdites pièces en matériau absorbant (1b), dans lequel la feuille thermoplastique (1d) est liée solidement à la structure de base (1a) et dans lequel la feuille se séparation (1c) repose de façon lâche sur les pièces en matériau absorbant (1b) et, entre les pièces en matériau absorbant (1b), est liée solidement localement à la feuille thermoplastique (1d), laquelle est liée solidement à la structure de base (1a).

2. Elément (1) selon la revendication 1, **caractérisé en ce que** les pièces en matériau absorbant (1b) sont entourées, de manière à former une barrière étanche à l'eau, par la feuille thermoplastique (1d) et la feuille de séparation (1c).

3. Elément (1) selon l'une quelconque des revendications 1 ou 2, **caractérisé en ce que** la température de fusion de la feuille de séparation (1c) est inférieure ou environ égale à celle de la structure de base (1a).

4. Elément (1) selon l'une quelconque des revendications 1 à 3, **caractérisé en ce que** les pièces en matériau absorbant (1b) comprennent de la mousse, un feutre ou une étoffe non tissée.

5. Elément (1) selon l'une quelconque des revendications 1 à 4, **caractérisé en ce que** les pièces en matériau absorbant (1b) sont compressibles avec auto-réexpansibilité d'un facteur 100, et en particulier d'un facteur 10.

6. Elément (1) selon l'une quelconque des revendications 1 à 5, **caractérisé en ce que** la structure de base (1a) comprend du thermoplastique renforcé de fibres discontinues.

7. Procédé de fabrication d'un élément insonorisant préformé (1) en thermoplastique renforcé de fibres, d'un matériau absorbant (1b) et d'une feuille de séparation (1c), **comprenant les étapes de :**
produire une structure de base (1a) à partir de thermoplastique renforcé de fibres par application de chaleur et de pression ;
lier une pluralité de pièces en matériau absorbant préformées (1b) à une feuille thermoplastique (1 d) ;
insérer une feuille de séparation (1c) à l'intérieur d'un moule (2b) d'un outil de formage (2b), ledit moule (2b) comportant des cavités (2c), dans lequel un vide est appliqué aux cavités (2c), forçant la feuille de séparation (1c) à épouser les contours des cavités (2c)
insérer la pluralité de pièces en matériau absorbant préformées (1b) à l'intérieur des cavités (2c), lesquelles sont doublées par la feuille de séparation (1c), de telle manière que la feuille thermoplastique (1d) demeure à l'extérieur des cavités ;
disposer la structure de base encore chaude (1a) de telle manière à recouvrir la feuille thermoplastique (1d) ;
fermer l'outil de formage (2) et appliquer de l'air sous pression aux cavités (2c) afin que la feuille de séparation (1c), les pièces en matériau absorbant (1b) et la feuille thermoplastique (1d) soient pressées contre la structure de base (1a), de telle manière que le façonnage de la structure de base (1a), la liaison de la feuille thermoplastique (1d) à la structure de base (1a) et la liaison de la feuille thermoplastique (1d) à la feuille de séparation (1c) dans leurs régions de contact mutuel s'effectuent en une seule étape.

8. Procédé selon la revendication 7, **caractérisé en ce que** l'étape de façonnage de la structure de base (1a), de liaison de la feuille thermoplastique (1d) à la feuille de base (1a) et la liaison de la feuille thermoplastique (1d) à la feuille de séparation (1c) en leurs points de contact mutuel, s'effectue environ à la température ambiante, et en particulier à 20°C environ.

9. Procédé selon l'une quelconque des revendications 7 ou 8, **caractérisé en ce que** la feuille de séparation (1c) est chauffée préalablement à son insertion à l'intérieur du moule de formage (2b).
